# EUROPEAN PATENT SPECIFICATION

(11) **EP 0 472 505 B1**
(45) Date of publication and mention of the grant of the patent: **27.09.1995**
(21) Application number: 91830321.5
(22) Date of filing: 23.07.1991
(51) Int. Cl.: F16H 7/08, B65G 23/44

(54) **Tensioning device**
Spannvorrichtung
Dipositif de tension

(30) Priority: 20.08.1990 IT 8498490
(43) Date of publication of application: 26.02.1992
(73) Proprietor: TECNIDEA CIDUE S.r.l., I-37123 Verona (IT)
(72) Inventor: Canova, Franco, I-37135 Verona (IT)
(74) Representative: Lanzoni, Luciano

(56) References cited:
- EP-A- 0 086 522
- EP-A- 0 348 861
- CH-A- 279 415
- GB-A- 1 175 951
- GB-A- 1 300 910

## Description

The present invention relates to a tensioning device, to be used in particular as a tensioning member for flexible motion-transmitting or conveyor means such as chains or belts.

A tensioning device as defined by the features of the first part of claim 1 is known from EP-A 348 861.
While the member in reference can fulfil a great number of functions, for the sake of clarity reference will be only made in the following to the particular field of tensioning members for flexible motion-transmitting or conveyor means. Said member is therefore intended to be mainly used as a tensioning member for taking up changes in the length of chains, catenaries, and belts in machines. However, as said, it can be used in many other situations and cases in the mechanics, robotics and components field.

Chain and belt stretchers or tighteners or tensioning devices that have been hitherto known can be divided into two main types: the first one is of the linear extension type in which the exerted thrust extends along a straight line, whereas the second type consists of lever stretchers which have the movable element capable of rotating about an arc of a circumference.

Tighteners of the known art have several different drawbacks depending upon the type.

Tighteners of the linear extension type substantially have the following drawbacks.

Due to the fact that they can only extend along a straight line, in the cases in which the available room is reduced they cannot be mounted. Actually, in very complicated machines involving many kinematic mechanisms disposed close to each other, just there is not enough room for mounting a tightener extending along a straight line. In this case in fact the flexible motion-transmitting means (chains or belts) to be stretched would be brought to inferfere with another member of the machine.

For a proper mounting linear tighteners need the use of at least two screws adapted to fasten the tightener body to the machine or a suitable support. An optimal situation would be on the contrary that in which a single securing screw can be used, which would save time in mounting. At all events this drawback is eliminated with the use of lever tighteners.

If linear tighteners are not mounted correctly, wear can occur in the course of time in the housing of the thrust columns. That is to say, if the force exerted by the chain or belt on the tightener is not in line with the tightener column, the column housing can be subjected to deformation.

Tighteners of the second type, that is lever tighteners, in which the lever is integral with a central body (provided with a threaded hole) into which a pair of springs or some rubber elements elastically counteracting the lever movement are introduced, have in turn the following drawbacks.

The type including the spring rubber elements cannot be used in situations in which the temperature exceeds a given value (approximately 100°C).

They are very cumbersome because they need a very bulky body in order to hold the mover (springs or rubber elements).

The shaped head adapted to come in contact with the chain or belt to be tensioned cannot be mounted sideways on the tightener lever, which involves a still greater bulkiness of the tightener itself.

Known tighteners can be rotated through a maximum angle of 30° to 45° depending upon the type.

They can only be mounted parallelly to the catenary running line. For example they cannot be mounted at right angles to the advancing direction of the chain or belt to be tensioned. Therefore, where there are particular requirements it is necessary to use a suitably shaped supporting bracket adapted to enable the tightener to be fastened according to the appropriate orientation.

In addition, there is also a loading problem connected with the inner springs on the mounting, due to the fact that the body does not have a conformation adapted to be grasped with a tool (a polygonal conformation for example) and therefore these tighteners are not very practical when the preloading operation is to be carried out.

The object of the present invention is therefore to further develop the known tensioning device so as to provide a tensioning device, in particular to be used as a tensioning member, which is of very simple construction, relatively inexpensive and very reliable.

The foregoing and further objects are all achieved by the tensioning device of the invention, in particular to be used as a tensioning member for motion-transmitting and conveyor means, the main features of which are set forth in the accompanying claims.

Further features and advantages of the invention will become more apparent from the detailed description of two preferred embodiments thereof, given hereinafter by way of non-limiting example with reference to the accompanying drawings, in which:
- Fig. 1 is a partly sectional side view of the member of the invention according to one embodiment thereof, the member being provided with a chain head;
- Fig. 2 is a partly sectional side view of the member of the invention according to a second embodiment thereof, the member being provided with a chain head;
- Fig. 3 is another view of the member represented in Fig. 1 where in dotted line the maximum permissible displacements thereof are shown;
- Figs. 4 to 7 represent the same member as shown in Fig. 2 where several examples of maximum permissible displasements are shown in dotted lines;
- Figs. 8 and 9 are a front and side view respectively of the member shown in Fig. 1, provided with an in-line chain-stretching head;
- Figs. 10 and 11 are a front and side view respectively of the member shown in Fig. 1, provided with an offset chain-stretching head;
- Figs. 12 and 13 are a front and side view respectively of the member shown in Fig. 1 provided with an in-line geared head;
- Figs. 14 and 15 are a front and side view respectively of the member shown in Fig. 1 provided with an offset geared head;
- Figs. 16 and 17 are a front and side view respectively of the member shown in Fig. 1 provided with an in-line belt-stretching head;
- Fig. 18 and 19 are a front and side view respectively of the member shown in Fig. 1 provided with an offset belt-stretching head.

Referring to the drawings a polygonal base body, in this case in the form of a cube, has been generally identified by reference numeral 1. On its accessible faces the body 1 is provided with threaded through holes 2 adapted to receive screws (not shown) for its being fastened to a machine or a support (not shown).

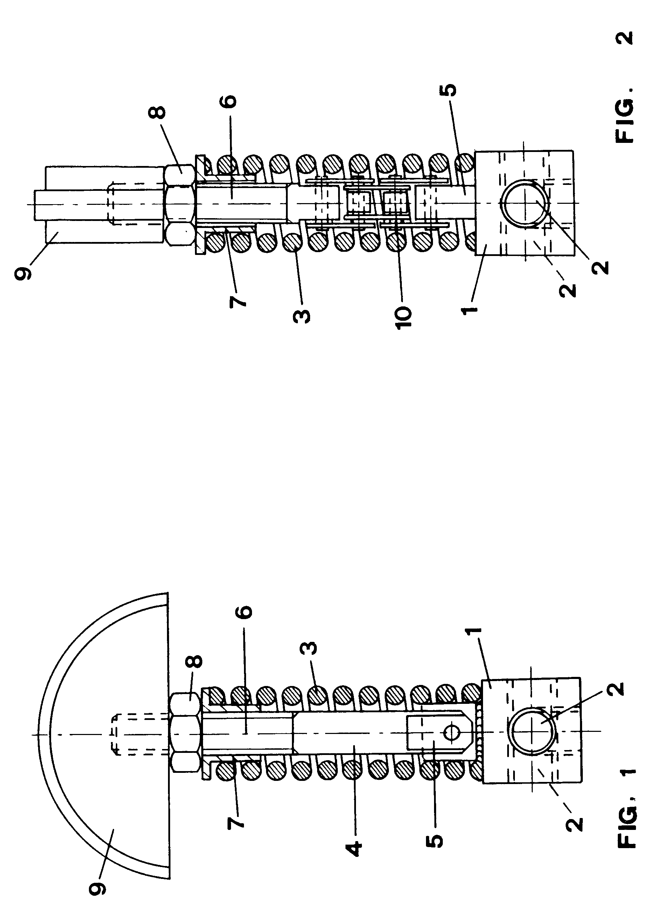

Denoted by 3 is a helical spring defining an inner cylindrical void inside which, according to the first embodiment shown in Fig. 1, a rectilinear rod 4 is housed which is hinged at the base to a fork 5 fastened to the body 1, and exhibiting a cylindrical threaded stem 6 at the top thereof.

A bushing 7 provided with a collar and locked by a nut 8 screwed to the stem 6 is interposed between the spring 3 and stem 6 in order to eliminate the existing slacks.

Fastened to the stem 6 top is a shaped head 9 adapted to act upon a driving chain or a conveyor chain (not shown) causing it to be tensioned.

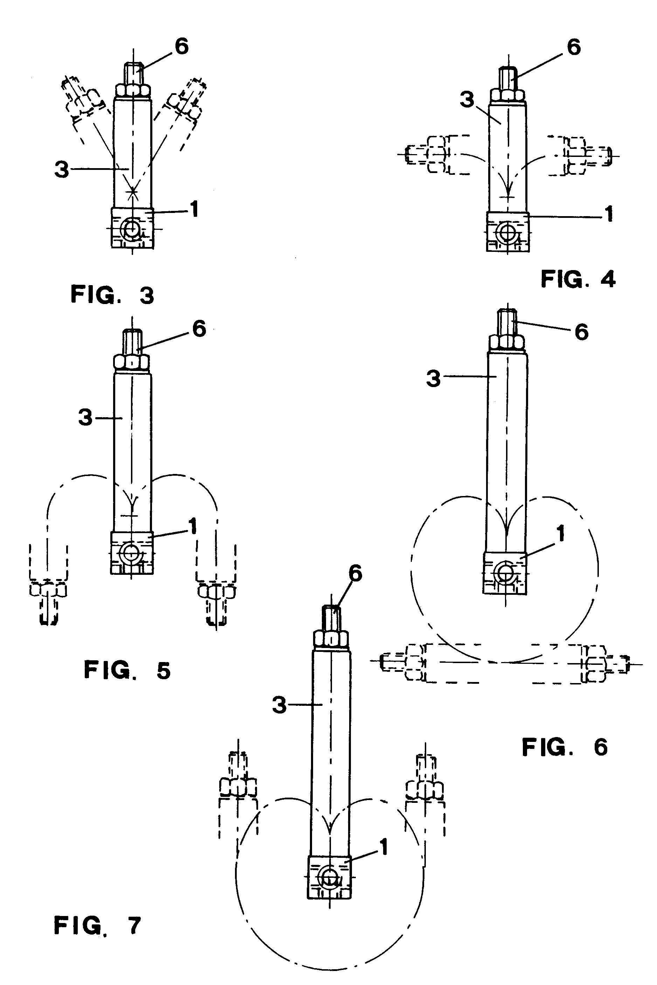

In accordance with this first configuration shown in Fig. 1 the chain-stretcher can be rotated sideways as far as it reaches an inclination of about 30°. This situation is shown in Figs. 3, 8, 10, 12, 14, 16 and 18.

In accordance with a second embodiment shown in Fig. 2 the rectilinear rod 4 is replaced by a chain 10 which is hinged at the base to the fork 5 and fastened at the top to the stem 6.

This conformation enables the tightener to be rotated sideways as far as various inclinations are reached, as shown in Figs. 4 to 7. More particularly: a rotation through 90° is shown in Fig. 4; a rotation through 180° is shown in Fig. 5; a rotation through 270° is shown in Fig. 6 and a rotation through 360° is shown in Fig. 7.

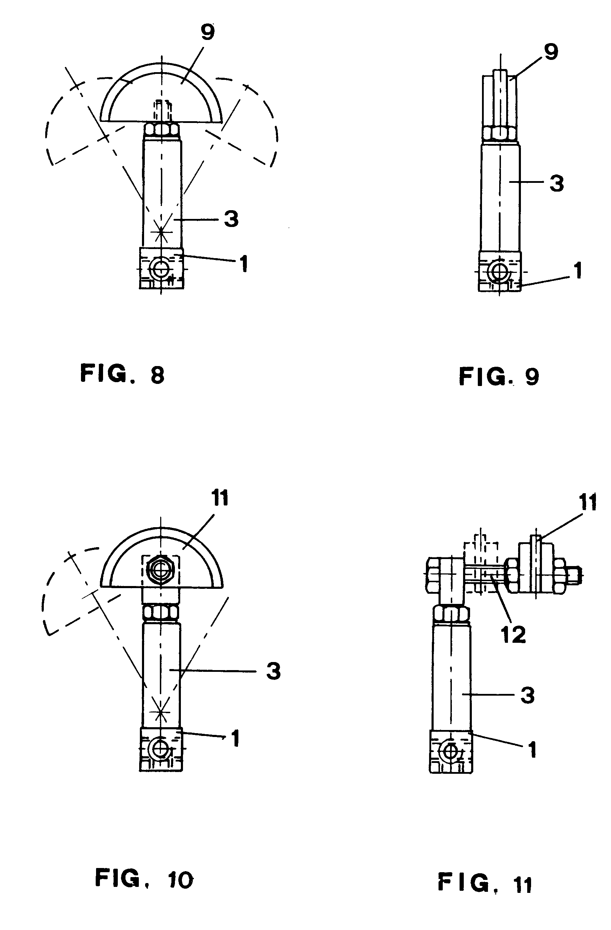

Examples of shaped heads adapted to be applied to the stem 6 top have been shown in Figs. 8 to 19.

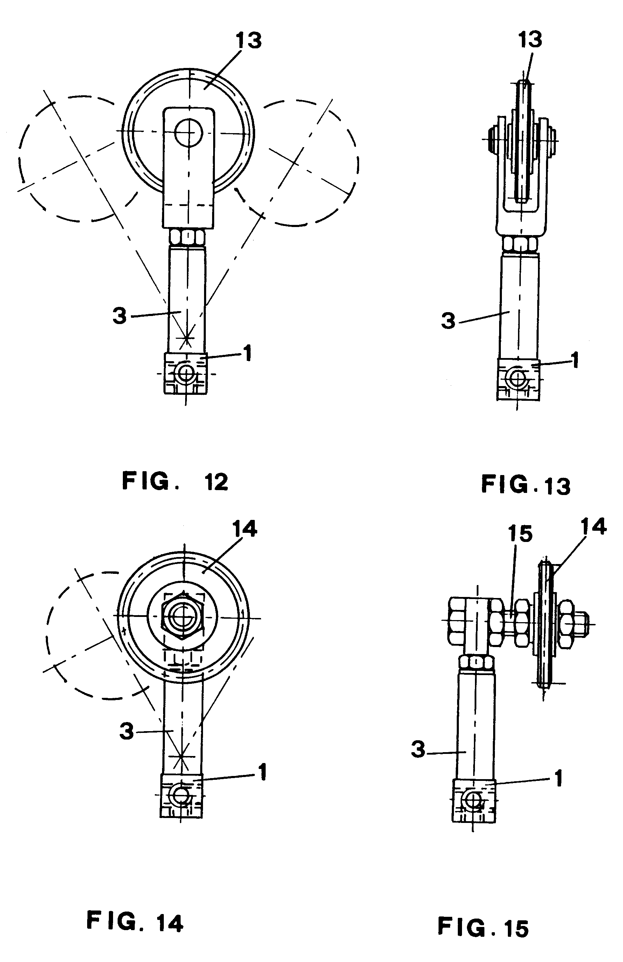

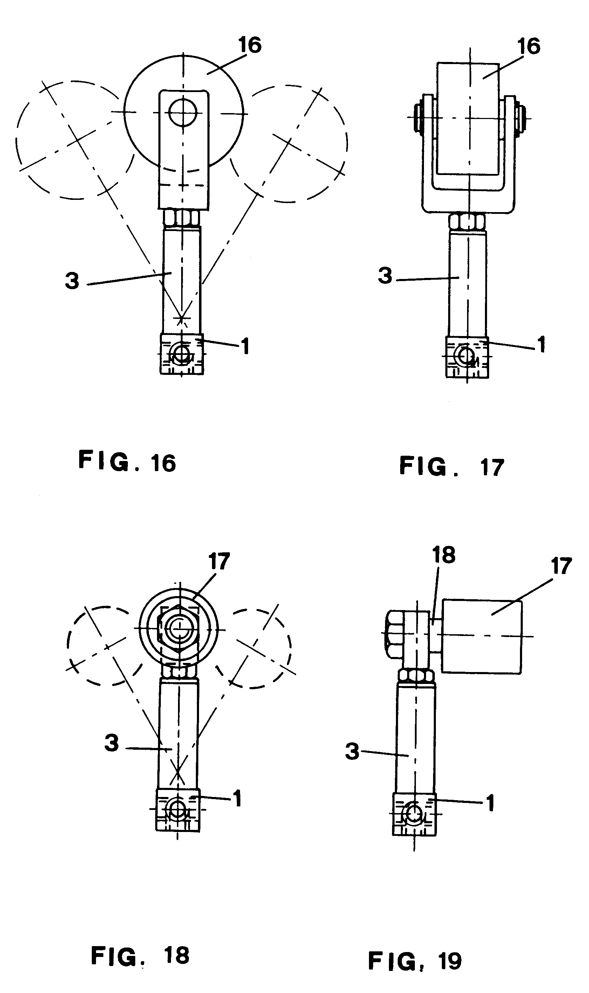

In greater detail: a chain head 9 disposed in line has been shown in Figs. 8 and 9; Figs. 10 and 11 show an offset chain head 11 carried by a support 12 (on which the head 11 can take different positions); Figs. 12 and 13 show a circular geared head 13 disposed in line; the head shown in Figs. 14 and 15 is an offset geared head 14 carried by a support 15; Figs. 16 and 17 show a belt-stretching head 16 disposed in line and Figs. 18 and 19 show an offset belt-stretching head 17 carried by a support 18.

The device in question when used as a tensioning member and in particular as a chain- or belt-stretcher, exhibits the following advantages as compared with the above mentioned known tensioning members:
- a very reduced bulkiness with respect both to tighteners of the linear extension type and traditional lever tighteners;
- it does not need the presence of orientation brackets in that the fastening of the polygonal body 1 can take place indifferently on any of its faces;
- in all embodiments of the shaped head 9, 11, 13, 14, 16 and 17 it is possible to select any intermediate position in the work orientation of the head itself within the range of 360° by loosening the fastening between the head and the stem 6;
- by suitably lengthening the chain 10 and spring 3 external thereto, inclinations included within the range of 360° and beyond this limit can be reached at will;
- no temperature problems exist since the member is completely made of metal;
- tighteners constructed as above can be combined with one another so as to form tightener sets, and to this end the conformation of the polygonal body 1 and the presence of holes 2 is utilized;
- the shaped head 9, 13 and 16 can be disposed perfectly in line with the rectilinear rod 4 and, as a result, all efforts are discharged onto the body 1 without any deformation or wear of the components being produced.

It is also to be noted that, by using the member in question as an elastically deformable member (that is not exactly as a tensioning member and therefore devoid of the shaped head 9) it is possible to create more or less complicated structural combinations formed with said members connected to one another, by virtue of the presence of the polygonal body 1 provided with holes 2 and the presence of the threaded stem 6 which can be screwed in said holes 2. In this way many spring structures designed for the most varied uses can be achieved.

## Claims

1. A tensioning device comprising
- a polygonal base body (1) provided with holes disposed on faces thereof, the holes being adapted to receive a screw to fasten the body (1) to a support,
- a cylindrical stem (6) adapted to carry a shaped head which acts upon a driving chain or a conveyor chain to be tensioned,
- a helical spring (3) held with its one end in a fixed position with respect to said polygonal base body (1) and acting with its other end on said cylindrical stem,
characterized in that
- said holes of said polygonal base body (1) are disposed on the accessible faces thereof, each hole being adapted to receive a screw to fasten the body (1) to a support,
- said cylindrical stem (6) is a threaded one,
- said helical spring (3) is held with its one end in a fixed position with respect to one face of said polygonal base body (1) and acts with its other end on said cylindrical threaded stem,
- a hinged connection located within the void defined by said helical spring (3) and provided between said polygonal base body (1) and said cylindrical threaded stem (6) such that the latter can rotate around said hinged connection against the spring force, so that said shaped head is urged against said driving chain or conveyor chain, whereby
- all components of said tensioning device are made of metal.

2. A tensioning device according to claim 1 characterized in that located in the cylindrical void defined by said helical spring (3) is a rectilinear rod (4) hinged at the base to a fork (5) fastened to said polygonal body (1) and exhibiting said cylindrical threaded stem (6) at the top thereof.

3. A tensioning device according to claim 1, characterized in that located in the cylindrical void defined by said helical spring (3) is a chain (10) articulated at the base to a fork (5) secured to said polygonal body (1) and fastened at the top to said cylindrical threaded stem (6).

4. A tensioning device according to claim 2 or 3, characterized in that a bushing (7) provided with a collar and locked by a nut (8) screwed to said threaded stem (6) is interposed between said cylindrical threaded stem (6) and said helical spring (3).

5. A tensioning device according to claim 1 or claims 2 to 4 characterized in that said polygonal base body (1) is of substantially cubic form.

6. A tensioning device according to claim 1 or claims 2 to 5, characterized in that said holes (2) located on the faces of said polygonal body (1) are threaded holes.

## Patentansprüche

1. Eine Spannvorrichtung, die folgendes umfaßt:
- einen polygonalen Grundkörper (1), der über Bohrungen verfügt, die sich auf dessen Seiten befinden, wobei die Bohrungen so ausgeführt sind, daß sie Schrauben aufnehmen können, die den Körper (1)an einem Träger befestigen,
- einen zylinderförmigen Schaft (6), der so augeführt ist, daß er einen geformten Kopf trägt, der auf eine Antriebskette oder eine Fließbandkette wirkt, die gespannt werden soll, eine Helix-Feder (3), die an einem Ende in einer festen Position zum genannten polygonalen Grundkörper (1) gehalten wird und deren anderes Ende auf den genannten zylinderförmigen Schaft wirkt,
dadurch gekennzeichnet, daß
- die genannten Bohrungen des genannten polygonalen Grundkörpers (1) sich an dessen zugänglichen Seiten befinden, wobei jede Bohrung so ausgeführt ist, daß sie eine Schraube aufnehmen kann, die den Körper an einem Träger befestigt,
- der genannte zylinderförmige Schaft (6) über ein Gewinde verfügt,
- die genannte Helix-Feder (3) mit ihrem einen Ende in einer festen Position zur einen Seite des genannten polygonalen Grundkörpers (1) gehalten wird und mit ihrem anderen Ende auf den genannten zylinderförmigen Schaft wirkt ,
- eine Scharnierverbindung, die sich in der von der genannten Helix-Feder (3) gebildeten Öffnung befindet und die eine Verbindung zwischen dem genannten polygonalen Grundkörper (1) und dem genannten zylinderförmigen Schaft (6) bildet, so daß letzterer sich um die Scharnierverbindung gegen die Federkraft drehen kann, wodurch der geformte Kopf gegen die genannte Antriebskette oder Fließbandkette gedrückt wird, wobei
- alle Bauteile der genannten Spannvorrichtung aus Metall gefertigt sind.

2. Eine Spannvorrichtung, gemäß Patentanspruch 1, dadurch gekennzeichnet, daß sich in der von der genannten Helix-Feder (3) gebildeten zylinderförmigen Öffnung ein geradliniger Stab (4) befindet, der unten klappbar an eine Gabel (5) angebracht ist, die an dem genannten polygonalen Körper (1) befestigt ist, wobei der genannte zylindrische Gewindeschaft (6) am oberen Ende des Körpers hervortritt.

3. Eine Spannvorrichtung, gemäß Patentanspruch 1, dadurch gekennzeichnet, daß sich in der von der genannten Helix-Feder (3) gebildeten zylinderförmigen Öffnung eine Kette (10) befindet, die unten an einer Gabel (5) angebracht ist, die wiederum an dem genannten polygonalen Körper befestigt ist und oben an dem genannten zylinderförmigen Gewindeschaft (6) befestigt ist.

4. Eine Spannvorrichtung, gemäß Patentanspruch 2 oder 3, dadurch gekennzeichnet, daß eine Buchse (7) mit einem Kragen versehen und durch eine Mutter (8) an dem genannten Gewindeschaft (6) festgeschraubt ist und zwischen dem genannten zylindrischen Gewindeschaft (6) und der genannten Helix-Feder (3) liegt.

5. Eine Spannvorrichtung, gemäß Patentanspruch 1 oder Patentansprüche 2 bis 4, dadurch gekennzeichnet, daß der genannte polygonale Grundkörper (1) von grundsätzlich kubischer Form ist.

6. Eine Spannvorrichtung, gemäß Patentanspruch 1 oder Patentansprüche 2 bis 5, dadurch gekennzeichnet, daß die genannten Bohrungen (2), die sich auf den Seiten des genannten polygonalen Körpers (1) befnden, Gewindebohrungen sind.

## Revendications

1. Un dispositif de tension comprenant
- Un corps de base polygonal (1) dotés d'orifices disposés sur ses faces, les orifices étant adaptés à recevoir une vis destinée à fixer le corps (1) au support;
- Une tige (6) cylindrique adaptée à porter une tête profilée agissant sur une chaîne d'entraînement ou une chaîne de convoyeur à tendre ;
- un ressort hélicoïdal (3) maintenu par l'une de ses extrémités dans une position fixe par rapport audit corps de base polygonal (1),
caractérisé en ce que
- lesdits orifices dudit corps de base polygonal (1) sont disposés sur ses faces accessibles, chaque orifice étant adapté à recevoir une vis destinée à fixer le corps (1) au support;
- ladite tige cylindrique (6) est filetée ;
- ledit ressort hélicoïdal (3) est maintenu par l'une de ses extrémités dans une position fixe par rapport à l'une des face dudit corps de base polygonal (1) et agit par son autre extrémité sur ladite tige cylindrique filetée ;
- un raccordement à charnière situé à l'intérieur du vide défini par ledit ressort hélicoïdal (3) et monté entre ledit corps de base polygonal (1) et ladite tige cylindrique filetée (6) de façon que cette dernière puisse tourner autour dudit raccordement à charnière contre la force du ressort, afin que ladite tête profilée soit poussée contre ladite chaîne d'entraînement ou chaîne de convoyeur, tous les éléments dudit dispositif de tension étant en métal.

2. Un dispositif de tension selon la revendication 1, caractérisé en ce que, à l'intérieur du vide cylindrique défini par ledit ressort hélicoïdal (3), se trouve une tige rectiligne (4) pivotant à la base à une fourche (5) fixée audit corps de base polygonal (1) et présentant ladite tige cylindrique filetée (6) au sommet de ce dernier.

3. Un dispositif de tension selon la revendication 1, caractérisé en ce que, à l'intérieur du vide cylindrique défini par ledit ressort hélicoïdal (3), se trouve une chaîne (10) articulée à la base à une fourche (5) assurée audit corps polygonal (1) et fixée au sommet à ladite tige cylindrique filetée (6).

4. Un dispositif de tension selon les revendications 2 ou 3, caractérisé en ce qu'une bague (7), dotée d'un collier et fixée par un verrou (8) vissé à ladite tige filetée (6), est interposée entre ladite tige cylindrique filetée (6) et ledit ressort hélicoïdal (3).

5. Un dispositif de tension selon la revendication 1 ou les revendications 2 à 4, caractérisé en ce que ledit corps de base polygonal (1) est approximativement de forme cubique.

6. Un dispositif de tension selon la revendication 1 ou les revendications 2 à 5, caractérisé en ce que lesdits orifices (2) situés sur les faces dudit corps polygonal (1) sont filetés.
